# EUROPÄISCHE PATENTANMELDUNG

(11) **EP 3 524 403 A1**
(43) Veröffentlichungstag der Anmeldung: **14.08.2019**
(21) Anmeldenummer: 18156455.0
(22) Anmeldetag: 13.02.2018
(51) Int. Cl.: B29C 45/73, B29C 33/04

(54) **VORRICHTUNG UND VERFAHREN ZUM KÜHLEN EINER GUSSFORM**

(71) Anmelder: G. A. Röders GmbH & Co. KG Druck- & Spritzguss, 29614 Soltau (DE)
(72) Erfinder: Röders, Andreas, 29614 Soltau (DE)
(74) Vertreter: Glawe, Delfs, Moll

(57) **Zusammenfassung**

Vorrichtung zum Kühlen einer Gussform (14), mit einer in der Gussform (14) ausgebildeten Verdampfungskammer (18), mit einer ersten Pumpe (23), um eine Flüssigkeit zu der Verdampfungskammer (18) zuzuführen, und mit einer zweiten Pumpe (30, 31), um in der Verdampfungskammer (18) einen von Atmosphärendruck abweichenden Druck anzulegen. Die Erfindung betrifft außerdem ein zugehöriges Verfahren. Durch die Erfindung wird es möglich, dass Abkühlen eines Gussteils gezielt zu steuern. Dies kann insbesondere beim Spritzgießen von Kunststoffteilen hilfreich sein.

## Beschreibung

Die Erfindung betrifft eine Vorrichtung zum Kühlen einer Gussform. Die Vorrichtung umfasst eine in der Gussform ausgebildete Verdampfungskammer. Mit einer ersten Pumpe wird der Verdampfungskammer eine Flüssigkeit zugeführt.

Beim Herstellen von Gussteilen wird ein Gussmaterial in flüssigem Zustand einem Formhohlraum einer Gussform zugeführt. In dem Formhohlraum kühlt das Gussmaterial ab und geht in einen festen Zustand über. Es entsteht ein Gussteil, das eine dem Formhohlraum entsprechende Form hat. Die Gussform kann geöffnet werden, um das Gussteil aus der Form zu entnehmen.

Um den Prozess der Abkühlung gezielt beeinflussen zu können, ist es bekannt, in bestimmten Bereichen des Gussformgehäuses eine Verdampfungskammer auszubilden. Eine Flüssigkeit, die unter hohem Druck zu der Verdampfungskammer geleitet wird, kann in der Verdampfungskammer entspannen, wodurch die Flüssigkeit verdampft. Die zum Verdampfen erforderliche Wärmemenge wird dem Gussformgehäuse und indirekt dem Gussmaterial in dem Formhohlraum entzogen, wodurch das Gussmaterial in diesem Abschnitt der Gussform gezielt gekühlt werden kann. Dieses Verfahren zum Kühlen einer Gussform wird auch als Jet-Cooling bezeichnet.

Wenn der Gussform durch Verdampfen einer Flüssigkeit Wärme entzogen wird, so hat dies den Vorteil, dass sich aufgrund der konstanten Verdampfungstemperatur eine definierte Temperatur im Umfeld der Verdampfungskammer einstellt. Wird beispielsweise Wasser bei Atmosphärendruck verdampft, so liegt die Temperatur im Wesentlichen konstant bei etwa 100 °C.

Der Erfindung liegt die Aufgabe zugrunde, eine Vorrichtung und ein Verfahren zum Kühlen einer Gussform vorzustellen, mit denen der Abkühlvorgang gezielt beeinflusst werden kann. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Bei der erfindungsgemäßen Vorrichtung ist eine zweite Pumpe vorgesehen, um in der Verdampfungskammer einen von Atmosphärendruck abweichenden Druck anzulegen.

Die Erfindung hat erkannt, dass durch Einstellen des Drucks in der Verdampfungskammer die Temperatur beeinflusst werden kann, bei der die Flüssigkeit verdampft. Durch Erhöhen des Drucks in der Verdampfungskammer kann die Verdampfungstemperatur erhöht werden, durch Vermindern des Drucks in der Verdampfungskammer kann die Verdampfungstemperatur vermindert werden. Mit einer reduzierten Verdampfungstemperatur kann der Abkühlvorgang beschleunigt werden, was genutzt werden kann, um die Taktzeit beim Herstellen von Gussteilen zu verkürzen. Mit einer erhöhten Verdampfungstemperatur kann der Abkühlvorgang verlangsamt werden, wodurch sich bei bestimmten Gussteilen eine höhere Oberflächenqualität oder eine verbesserte Struktur des Materials erreichen lässt.

Die erfindungsgemäße Kühlvorrichtung kann eine Zuleitung umfassen, die sich zu der Verdampfungskammer erstreckt. Um eine gezielte Kühlung zu ermöglichen, ist es von Vorteil, wenn die Flüssigkeit nicht in der Zuleitung verdampft, sondern erst beim Austritt der Flüssigkeit aus der Zuleitung in die Verdampfungskammer. Dies kann erreicht werden, indem die Flüssigkeit in der Zuleitung unter einem erhöhten Druck gesetzt wird. Der Druck, unter dem die Flüssigkeit in der Zuleitung steht ist deswegen vorzugsweise höher als der Druck in der Verdampfungskammer.

Die Zuleitung kann in einem zu der Verdampfungskammer benachbarten Abschnitt einen Durchmesser zwischen 0,5 mm und 2 mm, vorzugsweise zwischen 0,8 mm und 1,2 mm haben. Dies bezieht sich auf eine Zuleitung mit kreisförmigen Querschnitt. Bei Zuleitungen mit anderem Querschnitt kann die Querschnittsfläche entsprechend sein.

Um ein Verdampfen der Flüssigkeit in der Zuleitung auch dann zu verhindern, wenn die Temperatur der Zuleitung deutlich oberhalb der Verdampfungstemperatur in der Verdampfungskammer liegt, kann die Flüssigkeit in der Zuleitung unter einem entsprechend hohen Druck stehen. Beispielweise kann der Druck in der Zuleitung um wenigstens 5 bar, vorzugsweise um wenigstens 10 bar, weiter vorzugsweise um wenigstens 20 bar höher sein als der Druck in der Verdampfungskammer. Die erste Pumpe der erfindungsgemäßen Vorrichtung kann eine Flüssigkeitspumpe sein, die geeignet ist, die Flüssigkeit mit einem solchen Druck durch die Zuleitung zu fördern.

Die erfindungsgemäße Vorrichtung kann eine Ableitung umfassen, durch die Reste der Flüssigkeit in verdampftem oder flüssigem Zustand aus der Verdampfungskammer abgeführt werden können. Um zu vermeiden, dass es beim Verdampfen der Flüssigkeit zu einem starken Druckanstieg in der Verdampfungskammer kommt, kann die Ableitung einen größeren Querschnitt haben als die Zuleitung.

Die zweite Pumpe, mit der gemäß der Erfindung der Druck in der Verdampfungskammer eingestellt wird, kann an die Ableitung angeschlossen sein. Dies bedeutet, dass der von der zweiten Pumpe aufgebaute Druck über die Ableitung oder über einen Abschnitt der Ableitung zu der Verdampfungskammer übertragen wird.

Die erfindungsgemäße Vorrichtung kann an einem Kondensator angeschlossen sein, in dem verdampfte Flüssigkeitsmengen aus der Verdampfungskammer wieder kondensiert werden. Der Kondensator kann einen Wärmetauscher umfassen, mit dem überschüssige Wärme abgeführt wird. Als Kühlmedium für den Kondensator kann beispielsweise Wasser verwendet werden.

Der Kondensator kann einen Behälter umfassen, dessen unterer Bereich mit Flüssigkeit gefüllt ist. Die erste Pumpe kann an den unteren Bereich des Behälters angeschlossen sein. Wenn die erste Pumpe in Betrieb ist, wird Flüssigkeit aus dem unteren Bereich des Behälters angesaugt und durch die Zuleitung zu der Verdampfungskammer gefördert.

Die zweite Pumpe, mit der der gewünschte Druck in der Verdampfungskammer erzeugt wird, kann oberhalb des Flüssigkeitspegels an den Behälter des Kondensators angeschlossen sein. Ein von der zweiten Pumpe erzeugter Unterdruck oder Überdruck wird durch den Behälter des Kondensators und die Ableitung zu der Verdampfungskammer übertragen. Zwischen der zweiten Pumpe und der Verdampfungskammer kann ein Druckspeicher angeordnet sein, so dass der gewünschte Druck in der Verdampfungskammer auch dann aufrechterhalten werden kann, wenn die zweite Pumpe nicht in Betrieb ist.

Mit der Ableitung kann ein Ventil verbunden sein, das im geöffneten Zustand eine Verbindung zwischen der Ableitung und Atmosphärendruck herstellt. Bei geöffnetem Ventil findet ein Druckausgleich zwischen der Ableitung und der Umgebung statt, so dass sich in der Ableitung Atmosphärendruck einstellt. Es kann zweckmäßig sein, zwischen zwei Zyklen, in denen in der Verdampfungskammer zum Zwecke der Kühlungsflüssigkeit verdampft wird, einen Ausgleich auf Atmosphärendruck durchzuführen, um ein Verdampfen von Flüssigkeitsmengen während solcher Phasen zu unterbinden, in denen keine Kühlwirkung gewünscht ist.

Das Ventil kann an einer geeigneten Stelle zwischen der Verdampfungskammer und der zweiten Pumpe angeordnet sein, beispielsweise an der Ableitung, an dem Kondensator oder an dem Druckspeicher.

Die erfindungsgemäße Kühlvorrichtung kann mit einem Gasanschluss ausgestattet sein, über den ein Gas, insbesondere Luft, in die Verdampfungskammer eingelassen werden kann, um Flüssigkeitsreste aus der Verdampfungskammer auszublasen. Das Entfernen von Flüssigkeitsresten aus der Verdampfungskammer kann durchgeführt werden, um für den nächsten Kühlvorgang eine definierte Ausgangssituation zu schaffen, in der die Verdampfungskammer ausschließlich mit Gas gefüllt ist. Der Gasanschluss kann beispielsweise direkt an der Verdampfungskammer oder an einem Abschnitt der Zuleitung angeschlossen sein.

Ist der Gasanschluss geöffnet, so kann das Gas unter dem Einfluss einer Druckdifferenz in die Verdampfungskammer eintreten. Liegt in der Verdampfungskammer ein Unterdruck an, so kann die Druckdifferenz gegenüber Atmosphärendruck ausreichen, um das Gas anzutreiben. Möglich ist auch, dass das Gas unter einem Überdruck gegenüber Atmosphärendruck in den Gasanschluss eingeleitet wird. Die Flüssigkeitszufuhr durch die Zuleitung ist vorzugsweise unterbrochen, während Gas in die Verdampfungskammer eintritt.

Die zweite Pumpe ist in einer Ausführungsform eine Vakuumpumpe, die dazu ausgelegt ist, in der Verdampfungskammer einen Druck anzulegen, der kleiner ist als Atmosphärendruck. Der absolute Druck in der Verdampfungskammer, wenn die zweite Pumpe in Betrieb ist, kann beispielsweise zwischen 50 mbar und 800 mbar, vorzugsweise zwischen 100 mbar und 500 mbar liegen. Wird der Druck in der Verdampfungskammer auf beispielsweise 200 mbar reduziert, so verdampft das Wasser bereits bei 70 °C. Die Verwendung einer Vakuumpumpe ist zweckmäßig, wenn der Abkühlvorgang durch die Erfindung beschleunigt werden soll.

Die Verwendung einer Vakuumpumpe als zweite Pumpe ist außerdem zweckmäßig, wenn der Gussvorgang bei Werkzeugtemperaturen unterhalb von 100 °C erfolgt. Durch Verdampfen von Wasser bei Atmosphärendruck kann dann keine Kühlwirkung erzielt werden. Mit Werkzeugtemperaturen unterhalb von 100 °C wird beispielsweise beim Spritzgießen bestimmter Kunststoffe gearbeitet, wie etwa Polyoxymethylen (POM), Polyamid (PA) oder Polybutylenterephthalat (PBT).

In einer anderen Ausführungsform ist die zweite Pumpe eine Überdruckpumpe, die dazu ausgelegt ist, in der Verdampfungskammer einen Druck anzulegen, der größer ist als Atmosphärendruck. Der absolute Druck in der Verdampfungskammer, wenn die zweite Pumpe in Betrieb ist, kann beispielsweise zwischen 5 bar und 15 bar liegen. Die Verwendung einer Überdruckpumpe als zweite Pumpe kann zweckmäßig sein, wenn der Abkühlvorgang durch die Erfindung verlangsamt werden soll.

Wird mit Werkzeugtemperaturen deutlich oberhalb von 100 °C gearbeitet, so wird die Gussform lokal sehr stark gekühlt, wenn in der Verdampfungskammer Wasser bei Atmosphärendruck verdampft wird. Eine solche starke lokale Kühlung kann unerwünschte Effekte auf die Struktur des Materials in der Gussform haben oder zu einer verminderten Oberflächenqualität führen. Bei einer Erhöhung des absoluten Drucks in der Verdampfungskammer auf einen Wert von beispielsweise 10 bar, verdampft das Wasser erst bei einer Temperatur von etwa 200 °C. Das Material in der Gussform kann auf diese Weise einer weniger abrupten Abkühlung ausgesetzt werden. Ein verlangsamter Abkühlvorgang kann beispielsweise beim Spritzgießen bestimmter Kunststoffe gewünscht sein. Beispiele für solche Kunststoffe sind Polyacrylsäure (PAA), Polyphthalamide (PPA) oder Polyphenylensulfid (PPS).

Die erfindungsgemäße Kühlvorrichtung kann so gestaltet sein, dass sie eine Vakuumpumpe und eine Überdruckpumpe umfasst. Es kann ein Umschalter vorgesehen sein, um zwischen der Vakuumpumpe und der Überdruckpumpe umzuschalten, so dass je nach gewünschter Kühltemperatur in der Verdampfungskammer zwischen der Vakuumpumpe und der Überdruckpumpe umgeschaltet werden kann.

Die Gussform der erfindungsgemäßen Vorrichtung kann eine Mehrzahl von Verdampfungskammern umfassen. Den Verdampfungskammern kann synchron miteinander oder unabhängig voneinander Flüssigkeit zum Verdampfen zugeführt werden.

Die erste Pumpe und die zweite Pumpe der erfindungsgemäßen Vorrichtung können als separate bauliche Einheiten ausgebildet sein. Möglich ist auch, dass es sich bei der ersten Pumpe und der zweiten Pumpe um funktionale Elemente innerhalb einer einzelnen Pumpeneinheit handelt.

Die Erfindung betrifft außerdem eine Kunststoff-Spritzgussmaschine, bei der eine Spritzgussform mit einer solchen Vorrichtung gekühlt wird.

Die Erfindung betrifft außerdem ein Verfahren zum Kühlen einer Gussform, bei dem eine Flüssigkeit zu einer in der Gussform ausgebildeten Verdampfungskammer zugeführt wird, um die Flüssigkeit in der Verdampfungskammer zu verdampfen. Bei dem Verfahren wird in der Verdampfungskammer ein von Atmosphärendruck abweichender Druck angelegt. Die Erfindung betrifft außerdem ein Verfahren zum Herstellen eines Kunststoff-Spritzgussteils, bei dem eine Spritzgussform nach diesem Verfahren gekühlt wird.

Das Verfahren kann mit weiteren Merkmalen fortgebildet werden, die im Zusammenhang der erfindungsgemäßen Vorrichtung beschrieben sind. Die Vorrichtung kann mit weiteren Merkmalen fortgebildet werden, die im Zusammenhang des erfindungsgemäßen Verfahrens beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung einer erfindungsgemäßen Kunststoff-Spritzgussmaschine;
- Fig. 2:: ein Detail aus Fig. 1 in vergrößerter Darstellung;
- Fig. 3:: eine schematische Darstellung einer erfindungsgemäßen Vorrichtung zum Kühlen der Gussform.

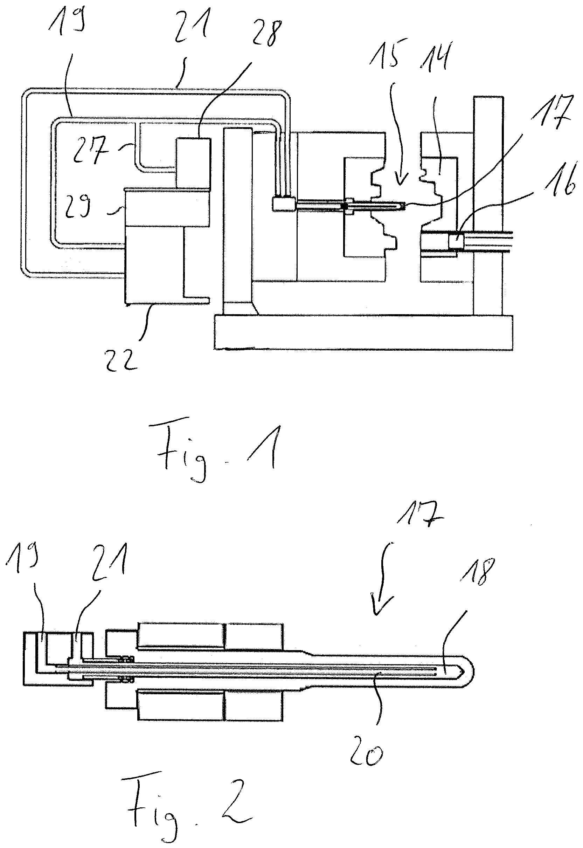

Eine in Fig. 1 gezeigte Kunststoff-Spritzgussmaschine umfasst eine Spritzgussform 14, in der ein Formhohlraum 15 ausgebildet ist. Die Spritzgussform 14 ist im geöffneten Zustand gezeigt, in dem zwei Hälften der Spritzgussform 14 voneinander beabstandet sind. Im geöffneten Zustand kann ein Spritzgussteil aus dem Formhohlraum 15 der Spritzgussform 14 entnommen werden.

Für den nächsten Spritzgussvorgang wird die Spritzgussform 14 in einen geschlossenen Zustand gebracht, in dem die beiden Hälften der Spritzgussform 14 dicht miteinander abschließen. Durch eine Vorwärts-Bewegung einer Kolbenschnecke 16 wird ein Kunststoffmaterial in flüssigem Zustand in den Formhohlraum 15 eingebracht. Es wird gewartet, bis das Kunststoffmaterial durch Abkühlen ausgehärtet ist. Die Spritzgussform 14 wird geöffnet und das fertige Spritzgussteil wird entnommen.

Die Spritzgussform 14 umfasst einen in den Formhohlraum 15 vorspringenden Formkern 17, durch den eine zylinderförmige Vertiefung in dem Spritzgussteil definiert wird. Für eine gute Struktur und Oberflächenqualität des Spritzgussteils im Bereich der zylinderförmigen Vertiefung soll der Abkühlvorgang in diesem Bereich gezielt gesteuert werden.

Der Formkern 17 umfasst dazu gemäß der vergrößerten Darstellung in Fig. 2 eine Verdampfungskammer 18, in der während des Abkühlvorgangs eine Flüssigkeit verdampft wird. In der Verdampfungskammer 18 stellt sich eine der Verdampfungstemperatur der Flüssigkeit entsprechende Temperatur ein, so dass das Abkühlen des Kunststoffmaterials in dem Formhohlraum 15 unter definierten Bedingungen erfolgt.

In dem Formkern 17 ist gemäß der vergrößerten Darstellung in Fig. 2 eine Zuleitung 19 ausgebildet, die sich als Kanal bis zu der Verdampfungskammer 18 erstreckt. In einem vorderen Abschnitt der Zuleitung 19 ist ein Kapillarröhrchen 20 angeordnet, dass einen Durchmesser von etwa 1 mm hat.

Eine Flüssigkeit, beispielsweise Wasser, wird unter hohem Druck durch die Zuleitung 19 und das Kapillarröhrchen 20 hindurch in die Verdampfungskammer 18 eingebracht. Der Druck in der Zuleitung 19 kann beispielsweise bei 15 bar liegen. Die Temperatur des Formkerns 17 ist höher als die Verdampfungstemperatur des Wassers, so dass das Wasser in der Verdampfungskammer 18 verdampft.

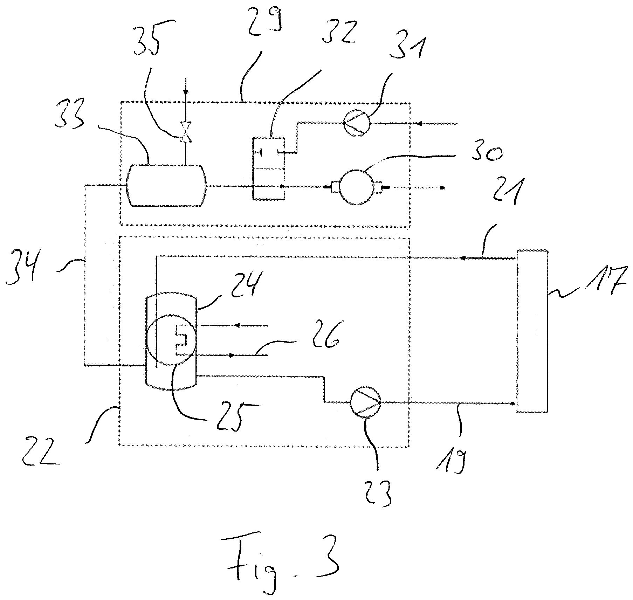

Die Zuleitung 19 ist gemäß Fig. 1 an eine Kühlvorrichtung 22 angeschlossen. Die Kühlvorrichtung 22 umfasst gemäß der schematischen Darstellung in Fig. 3 eine erste Pumpe 23, die dazu ausgelegt ist, das Wasser unter hohem Druck durch die Zuleitung 19 zu der Verdampfungskammer 18 zu pumpen. Durch eine Ableitung 21 werden der Dampf und Flüssigkeitsreste aus der Verdampfungskammer 18 abgeführt und zu der Kühlvorrichtung 22 zurückgeleitet.

In der Kühlvorrichtung 22 ist ein Kondensator 24 ausgebildet, in dem der Dampf wieder kondensiert wird. Über einen Wärmetauscher 25, der an einem Kaltwasser-Kreislauf 26 angeschlossen ist, wird die Kondensationswärme aus dem Kondensator 24 abgeführt. In einem unteren Abschnitt des Kondensators 24 sammelt sich das Wasser und kann von der Pumpe 23 erneut angesaugt werden.

An die Zuleitung 19 ist über eine Druckluftleitung 27 außerdem ein Kompressor 28 angeschlossen. Nach Abschluss eines Kühlvorgangs und wenn die Spritzgussform 14 geöffnet ist, wird ein Druckluftstoß durch die Zuleitung 19 geleitet, um den Dampf und Flüssigkeitsreste vollständig aus der Verdampfungskammer 18 zu verdrängen, so dass definierte Ausgangsbedingungen für den nächsten Abkühlvorgang vorliegen.
Liegt in der Verdampfungskammer 18 Atmosphärendruck an, so verdampft das Wasser bei 100 °C. Im vorliegenden Ausführungsbeispiel wird mit einer Werkzeugtemperatur von 90 °C gearbeitet, so dass durch ein Verdampfen bei 100 °C keine Kühlwirkung erzielt werden kann.

Die Kühlvorrichtung 22 der erfindungsgemäßen Spritzgussmaschine umfasst deswegen ein Druckmodul 29, das dazu ausgelegt ist, in der Verdampfungskammer 18 gezielt einem bestimmten Druck anzulegen, um die Verdampfungstemperatur zu beeinflussen. Dies kann in zwei Richtungen geschehen. Durch Reduzieren des Drucks in der Verdampfungskammer 18 kann die Verdampfungstemperatur reduziert werden. Durch eine reduzierte Verdampfungstemperatur kann der Kühlvorgang beschleunigt werden, was genutzt werden kann, um die Taktzeit beim Herstellen von Spritzgussteilen zu verkürzen. Durch Erhöhen des Drucks in der Verdampfungskammer 18 wird die Verdampfungstemperatur erhöht, wodurch der Abkühlvorgang des Kunststoffmaterials verlangsamt werden kann. Bei bestimmten Kunstmaterialien lässt sich dadurch die Oberflächenqualität verbessern.

Das Druckmodul 29 umfasst gemäß Fig. 3 eine Vakuumpumpe 30 und eine Überdruckpumpe 31, zwischen denen mit einem Umschalter 32 umgeschaltet werden kann. Die Vakuumpumpe 30 und die Überdruckpumpe 31 sind zweite Pumpen im Sinne der Erfindung. Mit den Pumpen 30, 31 kann ein von Atmosphärendruck abweichender Druck in einem Druckbehälter 33 angelegt werden. Um einen Druckausgleich mit Atmosphärendruck zu ermöglichen, ist der Druckbehälter 33 über ein Ventil 35 mit der Umgebung verbunden.

Der Druck aus dem Druckbehälter 33 überträgt sich durch eine Zwischenleitung 34, den Innenraum des Kondensators 24 sowie die Ableitung 21 bis in die Verdampfungskammer 18. Wird der Druckbehälter 33 mit der Vakuumpumpe 33 auf einen absoluten Druck von beispielsweise 200 mbar evakuiert, so liegt auch in der Verdampfungskammer 18 ein Druck von 200 mbar an. Das Wasser verdampft dann bereits bei einer Temperatur von 70 °C, so dass der Abkühlvorgang beschleunigt wird. Mit einem kürzeren Abkühlvorgang kann dazu beigetragen werden, die Taktzeit beim Herstellen von Spritzgussteilen zu verkürzen.

Wird mit der Überdruckpumpe 31 ein Überdruck in dem Druckbehälter 33 angelegt, so überträgt auch dieser sich in die Verdampfungskammer 18. Ein erhöhter Druck in der Verdampfungskammer 18 führt zu einer erhöhten Verdampfungstemperatur und damit zu einer Verlangsamung des Abkühlvorgangs. Durch einen langsameren Abkühlvorgang lässt sich bei bestimmten Kunststoffmaterialien eine verbesserte Oberflächenqualität des Spritzgussteils erreichen.

## Patentansprüche

1. Vorrichtung zum Kühlen einer Gussform (14), mit einer in der Gussform (14) ausgebildeten Verdampfungskammer (18), mit einer ersten Pumpe (23), um eine Flüssigkeit zu der Verdampfungskammer (18) zuzuführen, und mit einer zweiten Pumpe (30, 31), um in der Verdampfungskammer (18) einen von Atmosphärendruck abweichenden Druck anzulegen.

2. Vorrichtung nach Anspruch 1, **gekennzeichnet durch** eine Zuleitung (19), die sich zu der Verdampfungskammer (18) erstreckt.

3. Vorrichtung nach Anspruch 1 oder 2, **dadurch gekennzeichnet, dass** die Zuleitung (19) in einem zu der Verdampfungskammer benachbarten Abschnitt (20) einen Durchmesser zwischen 0,5 mm und 2 mm, vorzugsweise zwischen 0,8 mm und 1,2 mm hat.

4. Vorrichtung nach einem der Ansprüche 1 bis 3, **dadurch gekennzeichnet, dass** die der Verdampfungskammer (18) zugeführte Flüssigkeit in der Zuleitung (19) unter einem Druck steht, um wenigstens 5 bar, vorzugsweise um wenigstens 10 bar, weiter vorzugsweise um wenigstens 20 bar höher sein als der Druck in der Verdampfungskammer (18).

5. Vorrichtung nach einem der Ansprüche 1 bis 4, **gekennzeichnet durch** eine Ableitung (21), die sich von der Verdampfungskammer (18) erstreckt.

6. Vorrichtung nach Anspruch 5, **dadurch gekennzeichnet, dass** die Ableitung (21) einen größeren Querschnitt hat als die Zuleitung (19).

7. Vorrichtung nach Anspruch 5 oder 6, **dadurch gekennzeichnet, dass** die zweite Pumpe (30, 31) an die Ableitung angeschlossen ist.

8. Vorrichtung nach einem der Ansprüche 1 bis 7, **gekennzeichnet durch** einen Kondensator (24), um verdampfte Flüssigkeitsmengen aus der Verdampfungskammer (18) zu kondensieren.

9. Vorrichtung nach einem der Ansprüche 1 bis 8, **gekennzeichnet durch** einen Gasanschluss (27), um der Verdampfungskammer (18) ein Gas zuzuführen.

10. Vorrichtung nach einem der Ansprüche 1 bis 9, **dadurch gekennzeichnet, dass** die zweite Pumpe eine Vakuumpumpe (30) ist.

11. Vorrichtung nach einem der Ansprüche 1 bis 10, **dadurch gekennzeichnet, dass** die zweite Pumpe eine Überdruckpumpe (31) ist.

12. Kunststoff-Spritzgussmaschine mit einer Spritzgussform (14) und mit einer Vorrichtung zum Kühlen der Spritzgussform (14), wobei die Vorrichtung zum Kühlen nach einem der Ansprüche 1 bis 11, ausgebildet ist.

13. Verfahren zum Kühlen einer Gussform (14), bei dem eine Flüssigkeit zu einer in der Gussform (14) ausgebildeten Verdampfungskammer (18) zugeführt wird, um die Flüssigkeit in der Verdampfungskammer (18) zu verdampfen, und bei dem in der Verdampfungskammer (18) ein von Atmosphärendruck abweichender Druck angelegt wird.

14. Verfahren zum Herstellen eines Kunststoff-Spritzgussteils, beim dem eine Spritzgussform (14) mit dem Verfahren nach Anspruch 13 gekühlt wird.
